# EUROPÄISCHE PATENTSCHRIFT

(11) **EP 1 225 409 B1**
(45) Veröffentlichungstag und Bekanntmachung des Hinweises auf die Patenterteilung: **01.10.2003**
(21) Anmeldenummer: 01101047.7
(22) Anmeldetag: 18.01.2001
(51) Int. Cl.: F28D 7/00, F28F 9/26, F28F 9/02, F28F 1/04, F28G 7/00, F23J 15/06

(54) **Abgaskühler für staubbeladene gasförmige Medien**
Exhaust gas cooler for dust containing flue gas
Refroidisseur de fumées chargées de poussières

(43) Veröffentlichungstag der Anmeldung: 24.07.2002
(73) Patentinhaber: Lamitref Industries N.V., 2620 Hemiksem (BE)
(72) Erfinder: Dauterstedt, Joachim, 06295 Osterhausen (DE); Albrecht, Michael, 39240 Calbe/Saale (DE); Jünger, Frank, 06333 Hettstedt (DE); Schütt, Hans-Jürgen, 06333 Hettstedt (DE); Behling, Klaus, 06333 Hettstedt (DE)
(74) Vertreter: Tragsdorf, Bodo, Dipl.-Ing.

(56) Entgegenhaltungen:
- WO-A-99/02254
- FR-A- 658 208
- FR-A- 1 100 530
- GB-A- 159 489
- US-A- 3 850 231
- US-A- 4 776 391
- US-A- 5 315 966

## Beschreibung

Die Erfindung bezieht sich auf einen Abgaskühler zur Abkühlung hochbeladener staubhaltiger Prozeßgase oder Abluft, die insbesondere bei der Herstellung von Nichteisenmetallen in Schmelzöfen oder beim Verblasen von Metallschmelzen in Konvertern entstehen, wie im Oberbegriff des Patentanspruchs 1 nähert definiert wird. Ein derartiger Abgaskühler ist zum Beispiel aus der G-B-A-154 489 bekannt.

Es ist allgemein bekannt, daß zur Abkühlung von staubbeladenen Prozeßgasen Abgaskühler oder Abhitzekessel eingesetzt werden. Diese werden entweder mit Luft, als Luftkühler bzw. Abgaskühler, oder mit Wasser als Kühl- oder Wärmetauschermedium, für das abzukühlende heiße Gas betrieben. Die kontinuierlich anfallenden staubbeladenen Prozeßgase weisen eine Temperatur von ca. 500 bis 800 °C auf und müssen in einem Abgaskühler auf Temperaturen von 100 bis 200 °C gekühlt werden. Die Abgaskühler werden in der Regel im Unterdruckbereich, bei Drücken bis zu 3 kPa betrieben. Bekannt ist ein Abgaskühler (Prospekt Ausgabe 99.0 der Fa. Lühr Filter GmbH & Co. KG, D-31653 Stadthagen), der zur Kühlung von Rauchgasen eingesetzt wird. Der Abgaskühler besteht aus einem Gehäuse, in dem waagerecht angeordnete Flachrohre installiert sind, die von der Kühlluft durchströmt werden. Das zu kühlende Prozeßgas strömt zwischen den Außenwandungen der Flachrohre von oben nach unten oder von unten nach oben und gibt einen Teil seiner Wärme an die im Innenraum quer zum Prozeßgasstrom strömende Luft ab. Der grobe Staub des Prozeßgases wird in einem am unteren Ende des Gehäuses befindlichen Staubbunker gesammelt. Die sich an den Flachrohren festsetzenden Partikel werden mittels zwischen den Flachrohren befindlichen, hin- und herbewegbaren Ketten entfernt. Die einzelnen Wärmetauscherbaugruppen können parallel nebeneinander angeordnet sein, um mehrere Abgaszüge für das zu kühlende Prozeßgas zu bilden.
Ein genereller Nachteil der Abgaskühler besteht darin, daß im praktischen Betrieb durch das staubbeladene Prozeßgas Anbackungen an den Kühlflächen der Wärmetauscher entstehen, die zu Verstopfungen führen, die nur sehr schwer zu entfernen sind. Nach einer bestimmten Betriebsdauer muß die Anlage abgeschaltet und gereinigt werden. Die Reinigung der sehr teuren Anlagen erfordert einen erheblichen zusätzlichen Aufwand durch den Einsatz spezieller Hochdruckreinigungssysteme. Außerdem wird durch die Anbackungen während des Betriebes der Anlage die Kühlwirkung reduziert, so daß es zu Überhitzungen kommen kann, die zu einem Verschleiß, insbesondere Leckagen des Wärmetauschers führen können. Zu berücksichtigen ist auch, daß es sich bei den Staub- und Aschepartikeln des Prozeßgases um aggressive Bestandteile handeln kann, die eine Erosion und/oder Korrosion der Wärmetauscherbauteile begünstigen. Undichtheiten des Wärmetauschers wirken sich besonders nachteilig auf die zu erreichende Kühlleistung aus. Zur Vermeidung der Bildung von Ablagerungen auf den Rohrleitungen des Wärmetauschers wird in der DE 199 02 743 A1 vorgeschlagen, die Rohleitungen spiralförmig in einem bestimmten Steigwinkel von 45° oder mehr anzuordnen.
Ein Abgaskühler ist erheblichen Temperaturschwankungen ausgesetzt, die im Betriebszustand zu Materialausdehnungen von einigen Zentimetern führen können, die eine weitere Ursache für auftretende Undichtheiten an der Wärmetauscherbaugruppe sind.

Der Erfindung liegt die Aufgabe zugrunde, einen Abgaskühler zu schaffen, der besonders zur Kühlung staubbeladener Prozeßgase geeignet ist und sich durch eine verbesserte Kühlleistung und hohe Standzeiten auszeichnet.
Erfindungsgemäß wird die Aufgabe durch die im Anspruch 1 angegebenen Merkmale gelöst. Geeignete Ausgestaltungsvarianten sind Gegenstand der Ansprüche 2 bis 11. Der vorgeschlagene Abgaskühler besteht aus einem Gestell als offene Stahlbaukonstruktion, in dem mehrere Kühlmodule hintereinander, in Reihe, angeordnet sind. Zwischen den einzelnen Kühlmodulen besteht ein geringer Abstand, so daß die Umgebungsluft zusätzlich noch zur Kühlung des Prozeßgases ausgenutzt wird. Die einzelnen Kühlmodule, von denen jedes Kühlmodul einen separaten Abgaszug bildet, sind zur Führung des Prozeßgases miteinander verbunden. Die Kühlmodule werden als selbständig austauschbare Baueinheiten in entsprechende Aufnahmen des Gestells eingesetzt und besitzen hierfür an ihrem unteren Ende geeignete Ansätze. Diese münden luftdicht in Staubbunker zur Aufnahme von anfallenden Staubpartikeln. Ein Staubbunker ist jeweils für zwei benachbarte Kühlmodule ausgelegt, so daß der Staubbunker gleichzeitig als untere Umlenkung für das Prozeßgas in das nachfolgende Kühlmodul genutzt wird. Dadurch werden keine besonderen Umlenkelemente benötigt. Im Bereich der oberen Enden der Kühlmodule sind an dem Gestell Umlenkhauben für das Prozeßgas befestigt, jeweils vom zweiten zum dritten Kühlmodul und vom dritten zum vierten Kühlmodul und in analoger Weise auch für weitere Kühlmodule. An dem ersten und dem letzten Kühlmodul sind an Stelle der Umlenkhauben eine Einströmhaube bzw. eine Austrittshaube angeordnet. Die luftdichte Verbindung zwischen den Hauben und den Kühlmodulen erfolgt unter Zwischenschaltung eines Metallbalges als Kompensator für die während des Betriebszustandes auftretenden Materialausdehnungen bzw. Relativbewegungen der Bauteile infolge der auftretenden Temperaturunterschiede. Bei einem erforderlichen Austausch eines Kühlmoduls sind lediglich die Verbindungen zwischen dem oberen Flansch des Kühlmoduls und der zu diesem zugehörigen Haube zu lösen. Das Kühlmodul kann dann auf relativ einfache Weise mittels eines Hebezeuges aus der unteren Aufnahme herausgehoben werden. Die einzelnen Kühlmodule zeichnen sich durch eine kompakte Bauweise aus und bestehen aus schmalen, im Querschnitt rechteckförmigen, vom Prozeßgas durchströmten Kanälen, die in definierten Abständen zueinander angeordnet sind und in einen oberen und unteren Flansch eingesetzt und verschweißt sind. Unter rechteckförmig sind auch solche Kanäle zu verstehen, die an den schmalen Stirnseiten halbrund gebogen sind. Die Kanäle sollten eine Breite von ca. 80 bis 160 mm, vorzugsweise von 90 bis 120 mm, besitzen und z. B. eine Höhe von 6 m und eine Tiefe von 1 bis 2 m aufweisen. Das Verhältnis von Tiefe zu Breite (T/B) sollte 12,5 bis 16,666 betragen. Zur Gewährleistung der erforderlichen Stabilität der Kanäle ist es zweckmäßig, diese in ihrer Tiefe nicht zu groß auszubilden und innerhalb eines Kühlmoduls zwei Reihen von Kanälen anzuordnen, wobei jeweils zwei Kanäle miteinander fluchten und stirnseitig aneinander anliegen. Die Kanäle sind in dem oberen Flansch so befestigt, daß die im Betriebszustand auftretenden Relativbewegungen problemlos ausgeglichen werden und keine Leckagen durch Rißbildungen auftreten können. Hierzu ist vorgesehen, daß abwechselnd jeweils ein Rechteckkanal geringfügig aus dem oberen Flansch herausragt und mit einem als Kompensator dienenden Hutprofilrahmen verschweißt ist. Der Hutprofilrahmen ist an seiner unteren Seite mit dem oberen Flanschabschnitt verschweißt. Dadurch können die erforderlichen Materialdehnungen ausgeglichen werden. Der zwischen den Kanälen gebildete Zwischenraum ist zum Durchströmen der Kühlluft quer zur Richtung der Prozeßgasströmung bestimmt. Nach oben und unten sind die Zwischenräume für die Kühlluft durch die Stege der beiden Flansche und die Schweißverbindungen luftdicht abgeschlossen. An der Eintrittsseite für die Kühlluft befinden sich an den Kühlmodulen luftdichte Verkleidungen mit den angeschlossenen Kühlluftventilatoren. An der gegenüberliegenden Austrittseite für die Kühlluft sind entsprechende Lüftungsklappen angeordnet. Zusätzlich sind an den Außenseiten der Wände der Prozeßgaskanäle Rippen angeordnet, die in Strömungsrichtung der Kühlluft verlaufen. Durch die Rippen wird die Kühlwirkung verbessert und zugleich die Stabilität der Seitenwände erhöht. Ein Kanal ist z. B. mit 120 Rippen ausgerüstet, die eine Höhe von ca. 15 mm besitzen und eine Dicke von etwa 5 mm. Zur Verhinderung bzw. zur Minimierung möglicher Anbackungen an den Wänden der prozeßgasführenden Kanäle befinden sich an jedem Kühlmodul mindestens vier Klopfeinrichtungen, jeweils zwei einander gegenüberliegend im Bereich des Prozeßgaseintritts und des -austritts. Durch die in bestimmten Zeitabständen eingeschalteten Klopfeinrichtungen werden eventuelle Anbackungen abgeschlagen. Die einzelnen Kühlmodule sind in entsprechende Kühlzonen unterteilt, eine untere, eine mittlere und eine obere Kühlzone, wobei den einzelnen Kühlzonen jeweils ein Kühlluftventilator zugeordnet ist, so daß durch unterschiedliche Kühlvolumenströme die Kühlung des Prozeßgases gezielt beeinflußt werden kann. Es besteht auch die Möglichkeit für bestimmte Kühlmodule die Anzahl der Kühlluftventilatoren zu ändern, z.B. kann in den beiden letzten Kühlmodulen nur mit einem Ventilator gearbeitet werden, wobei dann innerhalb der Kühlzonen eine zusätzliche Umlenkung der Kühlluft erfolgt.
Der vorgeschlagene Abgaskühler zeichnet sich durch eine wirtschaftliche Betriebsweise zur Abkühlung staubbeladener Prozeßgase aus und ermöglicht die Erzielung hoher Kühlleistungen. Die kompakte Bauweise ermöglicht außerdem eine Reduzierung der Herstellungskosten. Die Auslegung Kühlmodule führt zu einer verringerten Bildung von Anbackungen und trägt damit zu einer Erhöhung der Standzeiten bei. Auf Grund der Kompensierung von Materialdehnungen ist das Entstehen von Leckagen nahezu ausgeschlossen. Der Abgaskühler kann mit geringem Aufwand veränderten Betriebsbedingungen angepaßt werden. Problemlos kann ein bereits installierter Abgaskühler mit weiteren Kühlmodulen nachgerüstet werden.

Die Erfindung soll nachstehend an einem Ausführungsbeispiel erläutert werden. In der zugehörigen Zeichnung zeigen
- Fig. 1: einen Abgaskühler in Schnittdarstellung als Vorderansicht einer Stirnseite,
- Fig. 2: den Abgaskühler gemäß Fig. 1 als Vorderansicht einer Längsseite,
- Fig. 3: ein Kühlmodul als Einzeldarstellung als Längsschnitt,
- Fig. 4: einen Schnitt gemäß der Linie A-A in Fig. 3,
- Fig. 5: einen Schnitt gemäß der Linie B-B in Fig. 3,
- Fig. 6: die Einzelheit X in Fig.2 in vergrößerter Schnittdarstellung und
- Fig. 7: die Einzelheit Y in Fig. 1 in vergrößerter Schnittdarstellung.

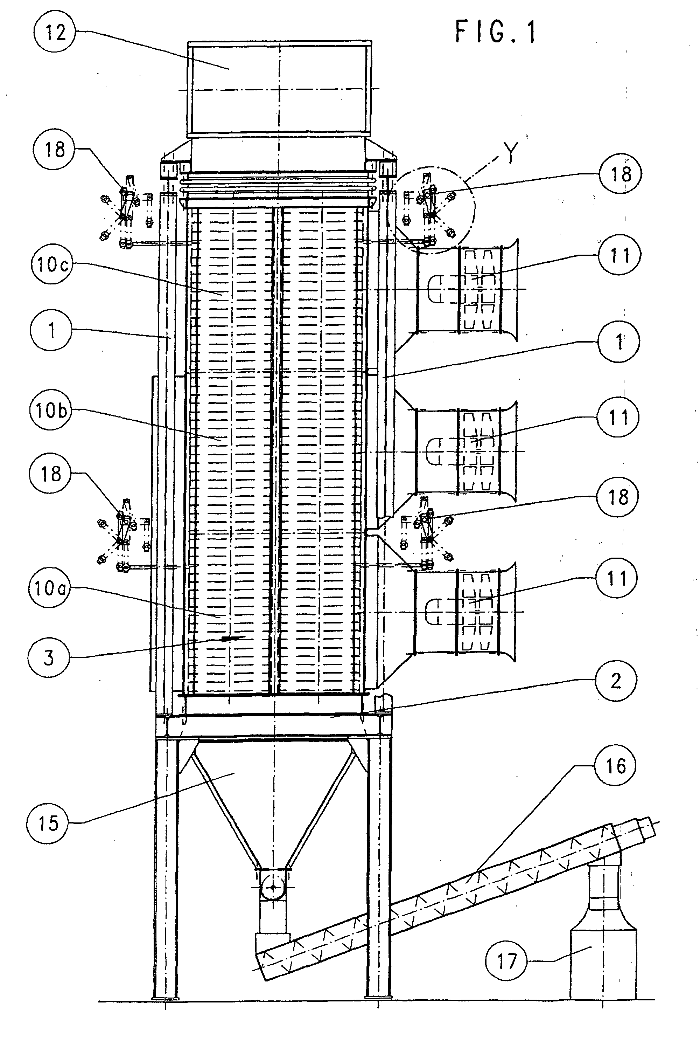

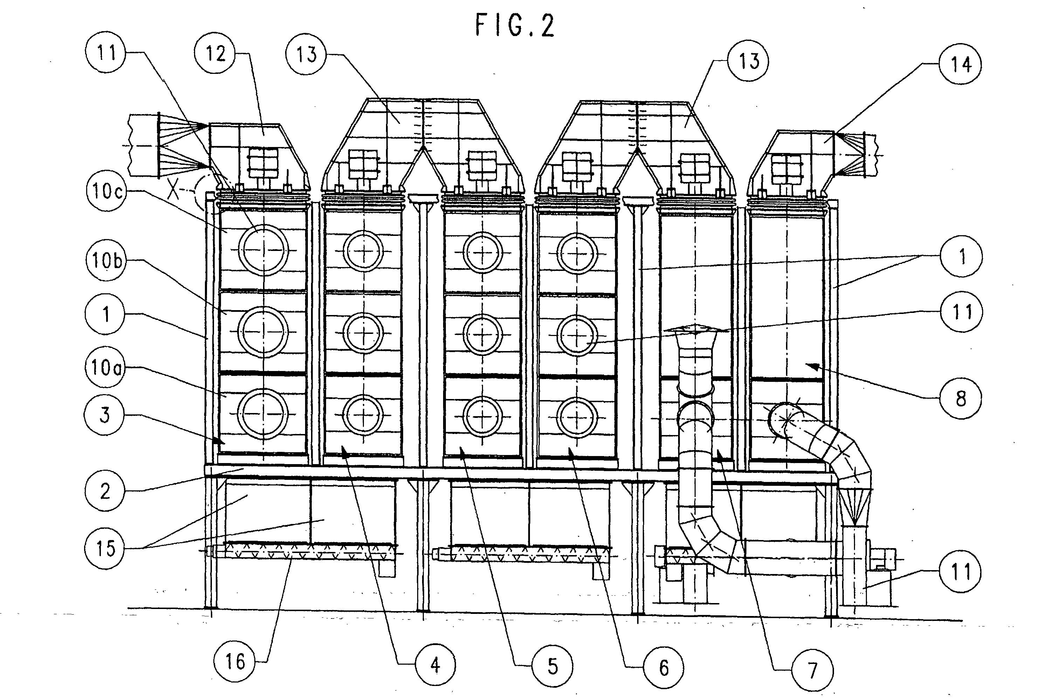

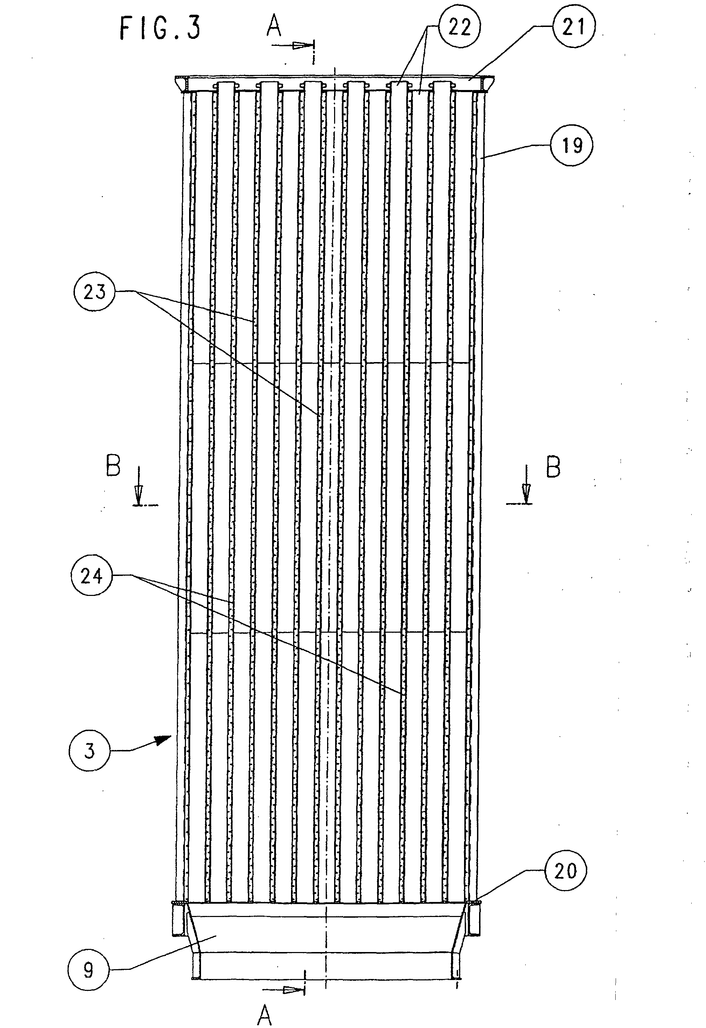

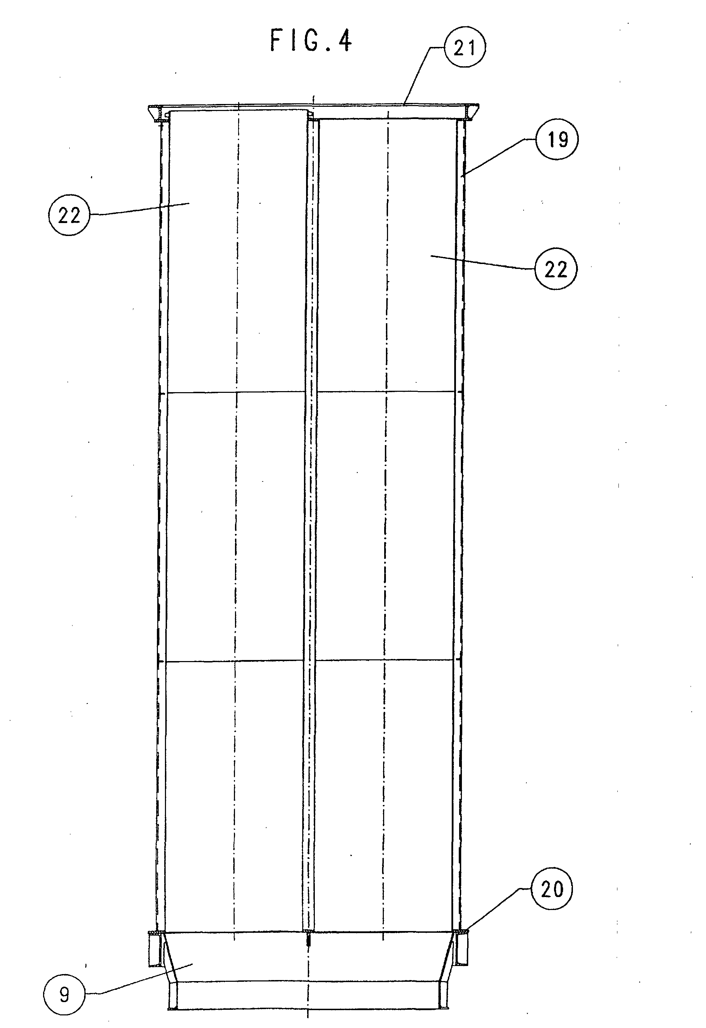

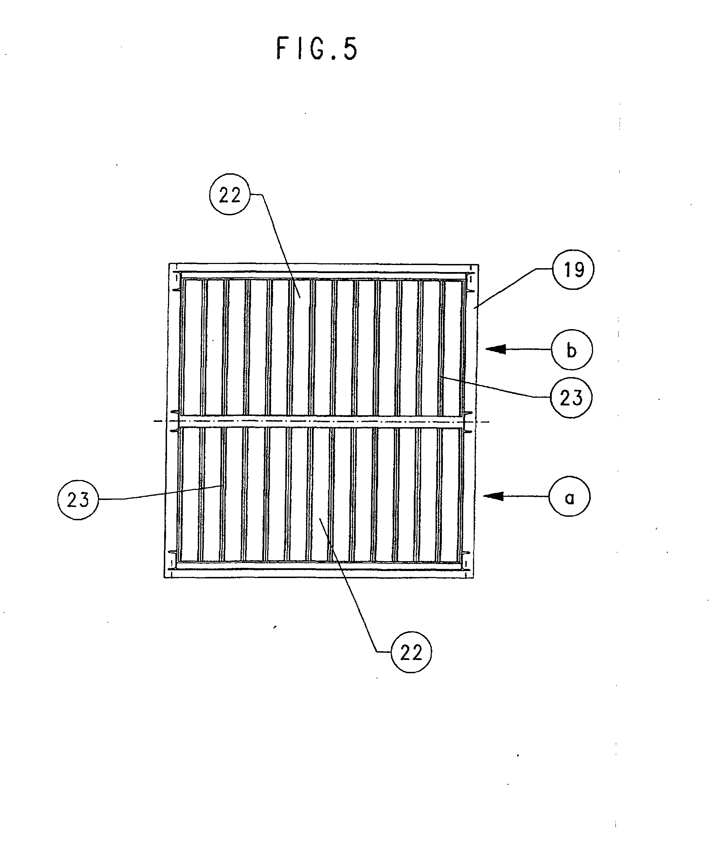

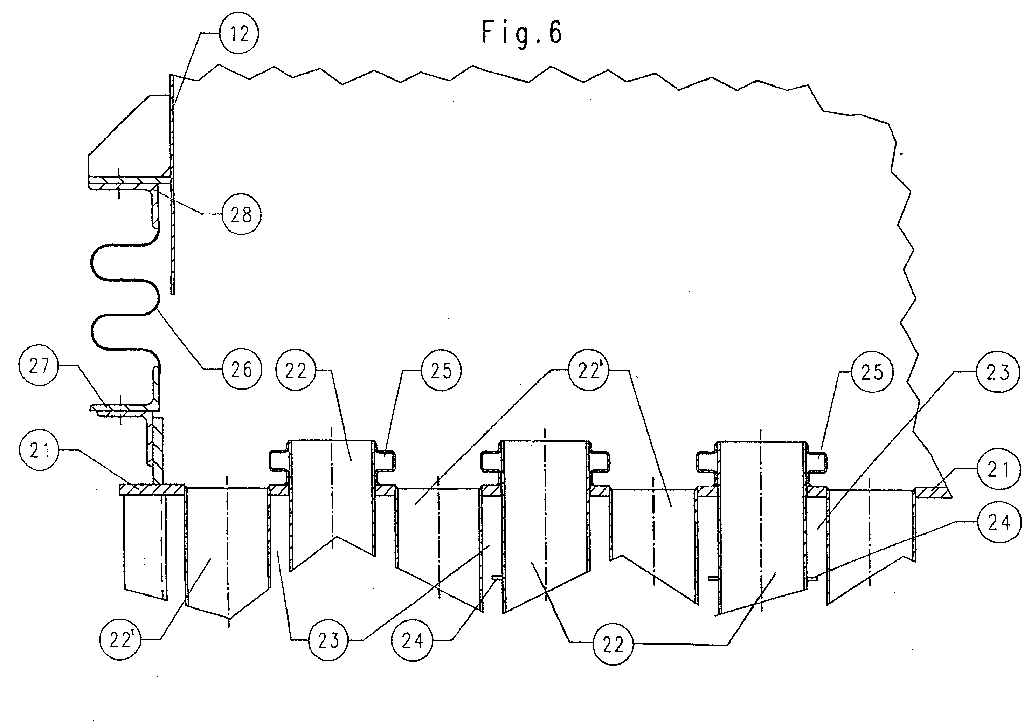

Der Abgaskühler besteht aus einem Gestell 1 als offene Stahlbaukonstruktion mit einer horizontalen Aufnahme 2, in die die einzelnen Kühlmodule in Reihe eingesetzt sind. Insgesamt ist der gezeigte Abgaskühler mit sechs Kühlmodulen 3, 4, 5, 6, 7 und 8 ausgerüstet. Die einzelnen Kühlmodule 3, 4, 5, 6, 7, 8 besitzen an ihrem unteren Ende einen verjüngten Ansatz 9 (Fig. 3) mit dem sie in die entsprechenden Öffnungen der Aufnahme 2 eingesetzt sind. Jedes Kühlmodul 3, 4, 5, 6, 7, 8 bildet einen Abgaszug und besteht aus einer oder mehreren Kühlzonen. in dem gezeigten Beispiel weisen die sechs Kühlmodule jeweils drei Kühlzonen, eine untere Kühlzone 10a, eine mittlere Kühlzone 10b und eine obere Kühlzone 10c auf. Jedem einzelnen Kühlmodul 3,4, 5, 6, 7, 8 bzw. Abgaszug ist mindestens ein Axialventilator 11 für die Zuführung der Kühlluft zugeordnet. Die ersten vier Kühlmodule 3, 4, 5, 6 sind mit jeweils drei Axialventilatoren 11 ausgerüstet, wobei jeder Kühlzone 10a, 10b, 10c ein Axialventilator11 zugeordnet ist. Die beiden letzten Kühlmodule 7 und 8 sind nur mit einem Axialventilator 11 ausgerüstet, der an der unteren Kühlzone 10a angeschlossen ist. In diesen beiden Kühlmodulen 7 und 8 wird die in die untere Kühlzone 10a einströmende Kühlluft umgelenkt, um in die mittlere Kühlzone 10b und von dieser in die obere Kühlzone 10c zu gelangen. An dem ersten Kühlmodul 3 ist eine Einströmhaube 12 angeschlossen über die das zu kühlende Prozeßgas eingeleitet wird. Dieses durchströmt das erste Kühlmodul 3 von oben nach unten, wird umgelenkt und durchströmt das zweite Kühlmodul 4 von unten nach oben und wird durch die Umlenkhaube 13 in das dritte Kühlmodul 5 eingeleitet und durchströmt dieses von oben nach unten und die nachfolgenden Kühlmodule 6, 7 und 8 in analoger Weise. Am oberen Ende des letzten Kühlmoduls 8 befindet sich eine Austrittshaube 14 für das abgekühlte Prozeßgas, das nachfolgend einer weiteren Behandlungsstufe, zum Beispiel einer Entstaubungsanlage, zugeführt wird. Die einzelnen Hauben 12, 13 und 14 sind fest an den oberen Längs- und Querträgern des Gestells 1 montiert. Am unteren Ende der einzelnen Kühlmodule 3, 4, 5, 6, 7 und 8 befinden sich luftdicht angeflanschte Staubbunker 15 zur Aufnahme der anfallenden Staubpartikel, die mittels Trogschneckenförderern 16 zu Sammelbehältern 17 transportiert werden. Die Staubbunker 15 erstrecken sich, wie in Fig. 2 gezeigt, über jeweils zwei benachbarte Kühlmodule 3 und 4 bzw. 5 und 6 sowie 7 und 8 und dienen gleichzeitig als Umlenkung für das Prozeßgas. Im Bereich des Prozeßgaseintritts und des -austritts der einzelnen Kühlmodule 3, 4, 5, 6, 7 und 8 sind an den beiden nach außen zeigenden Seiten an dem Gestell 1 mechanische Klopfvorrichtungen 18 für jedes Kühlmodul angeordnet (Fig. 1), um an den Wänden der prozeßgasführenden Kanäle anhaftende Staubpartikel zu entfernen.
Der konstruktive Aufbau der einzelnen Kühlmodule 3, 4, 5, 6, und 8 wird im folgenden unter Bezugnahme auf die Figuren 3 bis 6 erläutert. Die einzelnen Kühlmodule sind als Austauschbaugruppen identisch ausgebildet und bestehen aus einem stabilen Rahmen 19. Der Rahmen 19 ist an seiner Ober- und Unterseite mit jeweils einem stabilen Flanschblech 20 und 21 ausgerüstet, in das die einzelnen Kanäle 22 zur Führung des Prozeßgases eingesetzt sind. Die einzelnen Kanäle 22 sind als schmale, im Querschnitt rechteckförmige Kanäle ausgebildet und in gleichen Abständen parallel zueinander angeordnet. Unter "schmal" soll hier verstanden werden, daß die Kanäle 22 in ihrem Tiefenmaß um ein Vielfaches größer sind als das Breitenmaß. Selbstverständlich müssen die Kanäle eine bestimmte Mindestbreite aufweisen, die.in einem Bereich von 80 bis 160 mm liegen sollte, um einerseits eine ausreichende Kühlung des staubbeladenen Prozeßgases zu bewirken und andererseits Anbackungen und mögliche Verstopfungen weitestgehend auszuschließen. Die Kanäle 22 weisen zum Beispiel eine Höhe von 6 m und eine Tiefe von 1 m auf. Aus Stabilitätsgründen hat es sich daher als zweckmäßig erwiesen, innerhalb eines Kühlmoduls zwei Reihen a und b der Kanäle 22 anzuordnen, wobei die einzelnen Kanäle 22 der beiden Reihen a und b fluchtend unmittelbar hintereinander liegen. Durch die zwischen den einzelnen Kanälen 22 befindlichen spaltförmigen Zwischenräume 23 werden die entsprechenden Kanäle für das Durchströmen der Kühlluft gebildet. Die Spaltbreite der Zwischenräume 23 ist wesentlich kleiner als die Breite der Kanäle 22 für das Prozeßgas und beträgt ca. 20 bis 40 mm. An den äußeren Breitseiten der Wände der Kanäle 22 sind in Strömungsrichtung der Kühlluft verlaufende Rippen 24 angeordnet, die zu einer Verbesserung der Kühlwirkung führen und gleichzeitig zur Stabilitätsverbesserung der großflächigen Wände der Kanäle 22 dienen. Zum Ausgleich von Relativbewegungen durch unterschiedliche Wärmedehnung der eingesetzten Werkstoffe, sind einzelne rechteckförmige Kanäle 22 über sogenannte Kompensatoren mit dem oberen Flanschblech 21 verbunden, wie in Fig. 6 gezeigt. Die rechteckförmigen Kanäle 22 ragen abwechselnd aus dem oberen Flanschblech 21 hervor und sind über einen Hutprofilrahmen 25 aus Edelstahl mit dem angrenzenden Bereich des Flanschbleches 21 verbunden. Der Hutprofilrahmen 25 ist an seinem oberen Ende mit dem entsprechenden Kanal 22 verschweißt und an seinem unteren Ende mit dem Flanschblech 21. Der vorhergehende bzw. nachfolgende rechteckförmige Prozeßgaskanal 22' schließt in etwa bündig mit dem oberen Flanschblech 21 ab und ist mit diesem verschweißt. In den anderen Figuren sind die rechteckförmigen Kanäle für die Führung des Prozeßgases ausschließlich mit dem Bezugszeichen 22 bezeichnet. An der in Bodenrichtung zeigenden Seite sind die Kanäle 22 und 22' bündig mit dem mit dem unteren Flanschblech 20 ebenfalls luftdicht verschweißt. Im Betriebszustand ist somit sichergestellt; daß keine Kühlluft in die das Prozeßgas führenden Kanäle 22 und 22' gelangen kann. Die einzelnen Kühlmodule können bei auftretenden Störungen problemlos und mit geringem Aufwand ausgetauscht werden. Innerhalb des Abgaskühlers sind die einzelnen Kühlmodule nur fest mit der jeweiligen Haube 12, 13 oder 14 verbunden. Zum Ausgleich auftretender Relativbewegungen aufgrund der Materialdehnungen erfolgt die luftdichte Verbindung zwischen den einzelnen Hauben 12, 13, 14 und den Kühlmodulen 3, 4, 5, 6, 7, 8 über einen zwischengeschalteten Metallbalg 26 (Fig. 6). Dieser ist über entsprechende rahmenförmige Flanschverbindungen 27, 28 mit dem jeweiligen Kühlmodul 3, 4, 5, 6, 7 oder 8 und der dazugehörigen Haube 12, 13, 14 verbunden.

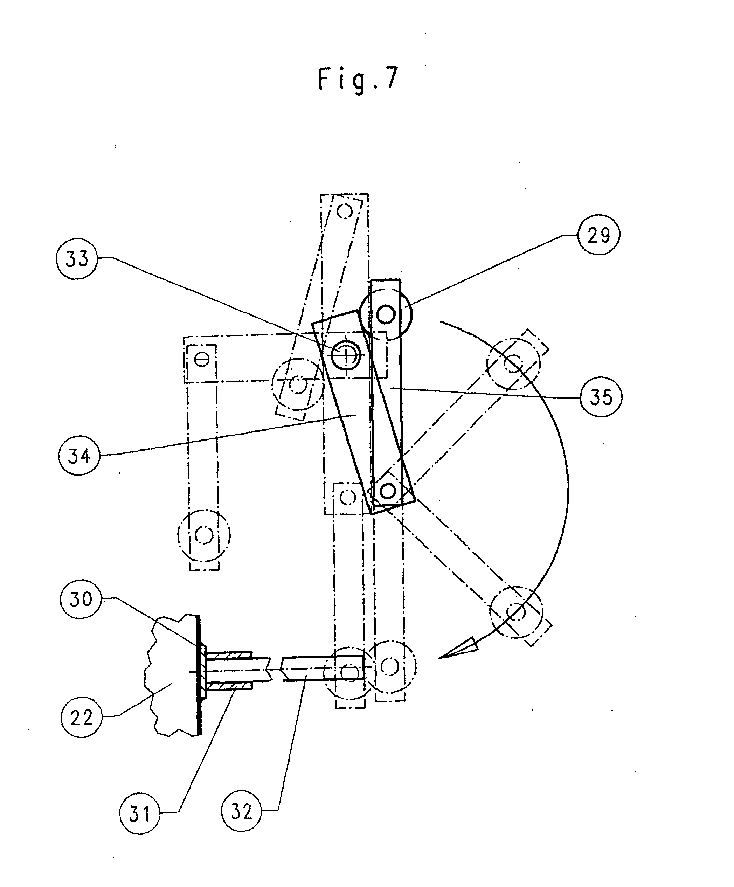

In der Fig. 7 ist noch eine der in Fig. 1 gezeigten Kopfvorrichtungen 18 näher dargestellt. Im Wirkungsbereich des Schlaggewichtes 29 der Klopfvorrichtung ist an der äußeren-Wand des benachbarten Prozeßgaskanals 22 eine Verstärkungsplatte 30 mit einer Führungshülse 31 angeschweißt, in der der Schlagbolzen 32 der Klopfvorrichtung geführt ist. Die Klopfvorrichtung besteht ferner aus einem auf einer Antriebswelle 33 gelagertem Führungshebel 34, der an seinem freien Ende mit einem weiteren drehbaren Hebel 35 verbunden ist, an dessen Ende das Schlaggewicht 29 befestigt ist. Dieser Teil der Klopfvorrichtung 18 ist in der entsprechenden Höhe an dem Gestell 1 befestigt. Durch Rotation der Antriebswelle 33 wird der Hebel 35 mit dem Schlaggewicht 29 in die obere Totpunktlage bewegt und fällt bei weiterer Drehbewegung auf einer Kreisbogenbahn nach unten und schlägt gegen den in der Führungshülse 31 befindlichen Schlagbolzen 32, wodurch die gewünschte Klopfbewegung erzielt wird. Die in periodischen Zeitabständen ausgelösten Klopfbewegungen gegen die Kühlmodule verursachen ein Ablösen von gebildeten staubförmigen Anbackungen an den Innenseiten der Wände der das Prozeßgas führenden Kanäle 22 und 22'.
Die Wirkungsweise des beschriebenen Abgaskühlers ist folgende.
Das staubbeladene Prozeßgas wird, wie in Fig. 2 ersichtlich, durch die Einströmhaube 13 in das erste Kühlmodul 3 eingeleitet und durchströmt die insgesamt in jedem Kühlmodul angeordneten zwei Reihen a und b mit je 13 rechteckförmigen Kanälen 22 von oben nach unten und das jeweils nachfolgende Kühlmodul in der umgekehrten Richtung. Gleichzeitig wird quer zur Strömungsrichtung des Prozeßgases in die". Zwischenräume 23 zwischen den Kanälen 22 aus der Umgebung angesaugte Kühlluft mittels der Kühlluftventilatoren 11 geblasen, die an der gegenüberliegenden Seite der Kühlmodule wieder aus diesen austritt und in die Umgebung gelangt. Bei einer Auslegung des Abgaskühlers mit sechs Kühlmodulen mit je 450 m² Kühlfläche und einem Kühlvolumenstrom je Ventilator von 20 000 bis 36 000 m³ N/h kann ein Abgasvolumenstrom von ca. 130 000 m³ /h mit einer Temperatur von ca. 500 °C und einem Staubgehalt von ca. 15g/ m³ N auf eine Temperatur von ca. 120 °C abgekühlt werden, ohne die Bildung von den Betriebsprozeß störenden Anbackungen an den Wänden der Prozeßgaskanäle, bei einer Anschlagfrequenz der Klopfvorrichtungen von 4/h.

## Patentansprüche

1. Abgaskühler zur Kühlung von staubbeladenen Prozeßgasen, mit mehreren Abgaszügen, die durch jeweils eine aus mehreren beabstandet zueinander angeordneten Wärmetauscherelementen bestehende Baugruppe gebildet sind, und einer am unteren Ende des Gehäuses angeordneten Sammeleinrichtung zur Aufnahme von Staubpartikeln sowie einer Abreinigungsvorrichtung zur Entfernung von an den Wärmetauscherelementen anhaftenden Partikeln, **dadurch gekennzeichnet, daß** dieser aus einer offenen Stahlbaukonstruktion (1) besteht, in der mehrere jeweils ein Kühlmodul (3, 4, 5, 6, 7, 8) bildende Abgaszüge angeordnet sind, die zur Führung des Prozeßgases miteinander verbunden sind, wobei die Kühlmodule (3, 4, 5, 6, 7, 8) an ihrer Oberseite mittels Kompensatoren (26) mit einer Einström- (12), Umlenk- (13) oder Austrittshaube (14) verbunden sind, und die einzelnen Kühlmodule (3, 4, 5, 6, 7, 8) aus in Strömungsrichtung des Prozeßgases parallel zueinander angeordneten, schmalen, im Querschnitt rechteckförmigen Kanälen (22, 22') für das Durchströmen des Prozeßgases bestehen, die in mindestens einem oberen und unteren Flansch ( 20, 21) in gleichem seitlichen Abstand zueinander gehalten sind, um entsprechende spaltförmige Zwischenräume (23) für das Durchströmen der Kühlluft zu bilden, und an den von der Kühlluft umströmten Außenseiten der Wände der rechteckförmigen Kanäle (22, 22') in Strömungsrichtung der Kühlluft verlaufende Rippen (24) angeordnet sind.

2. Abgaskühler nach Anspruch 1, **dadurch gekennzeichnet, daß** zur Entfernung von an den Wänden der prozeßgasführenden Kanäle (22, 22') anhaftenden Staubpartikeln an jedem Kühlmodul (3, 4, 5, 6, 7, 8) mindestens jeweils im Bereich des Prozeßgaseintritts und des -austritts zwei einander gegenüberliegende mechanische Klopfeinrichtungen (18) angeordnet sind.

3. Abgaskühler nach einem der Ansprüche 1 oder 2, **dadurch gekennzeichnet, daß** die einzelnen rechteckförmigen Kanäle (22, 22') zur Führung des Prozeßgases in ihrer Reihenfolge abwechselnd aus dem oberen Flansch (21) herausragen und über einen Kompensator (25) mit dem oberen Flansch (21) verbunden sind.

4. Abgaskühler nach einem der Ansprüche 1 bis 3, **dadurch gekennzeichnet, daß** die einzelnen Kühlmodule (3, 4, 5, 6, 7, 8) als austauschbare Baugruppen ausgebildet sind und an ihrem unteren Ende einen Ansatz (9) aufweisen, mit dem sie in an dem Gestell (1) befindlichen Aufnahmen (2) einsetzbar sind.

5. Abgaskühler nach einem der Ansprüche 1 bis 4, **dadurch gekennzeichnet, daß** die rechteckförmige Kanäle (22, 22') fluchtend in zwei Reihen (a, b) unmittelbar hintereinander liegend angeordnet und in einem Rahmen (19) gehalten sind.

6. Abgaskühler nach einem der Ansprüche 1 bis 5, **dadurch gekennzeichnet, daß** jedes Kühlmodul (3, 4, 5, 6, 7, 8) drei übereinanderliegende Kühlzonen (10a,10b, 10c) aufweist und mindestens einer Kühlzone (10a, 10b, 10c) ein Kühlluftventilator (11) zugeordnet ist.

7. Abgaskühler nach einem der Ansprüche 1 bis 6, **dadurch gekennzeichnet, daß** innerhalb eines Kühlmoduls (3, 4, 5, 6, 7, 8) einzelne Kühlzonen (10a, 10b,10c) durch einen Luftumlenkungskanal miteinander verbunden sind.

8. Abgaskühler nach einem der Ansprüche 1 bis 7, **dadurch gekennzeichnet, daß** die rechteckförmigen Kanäle (22, 22') ein Verhältnis von Tiefe zu Breite T/B von 12,5 bis 16,666 aufweisen.

9. Abgaskühler nach einem der Ansprüche 1 bis 8, **dadurch gekennzeichnet, daß** die Breite B der Kanäle (22, 22') in einem Bereich von 80 bis 160 mm liegt.

10. Abgaskühler nach einem der Ansprüche 1 bis 9, **dadurch gekennzeichnet, daß** die einzelnen Kühlmodule (3, 4, 5, 6, 7, 8) in einem definierten Abstand zueinander angeordnet sind.

11. Abgaskühler nach einem der Ansprüche 1 bis 10, **dadurch gekennzeichnet, daß** im Wirkungsbereich der Klopfeinrichtungen (18) an den äußeren Wänden der außenliegenden Kanäle (22, 22') Verstärkungsplatten (30) mit einer Führungshülse (31) zur Aufnahme eines Schlagbolzens (32) befestigt sind.

## Claims

1. Waste gas cooler for cooling dust-loaded process gases, with several flues created by heat exchanger elements appropriately spaced to form individual structural components, and a collector arranged at the lower end of casing to take up dust particles, and a cleaning device to remove adhering particles from the surface of heat exchanger elements, **characterized in that** such cooler comprises an open steel structure (1) in which are arranged several flues each of them forming one cooling module (3, 4, 5, 6, 7, 8) all of which are connected to each other to guide the process gas, and where the cooling modules (3, 4, 5, 6, 7, 8) have compensators (26) at their upper ends to get connected to either an inflow bonnet (12), a deflection bonnet (13), or an outlet bonnet (14), and where the Individual cooling modules (3, 4, 5, 6, 7, 8) consist of narrow ducts with square-shaped cross section (22, 22') arranged in flow direction parallel to each other through which the process gas can flow, and which are equipped with at least one upper and one lower flange (20, 21) in which they are held equidistantly in lateral direction to form appropriate slit-like channels (23) to allow cooling air to flow through, and rips (24) arranged in flow direction of the cooling air that are attached to the outer surfaces of the walls of the square-shaped ducts (22, 22') over which the cooling air is streaming.

2. Waste gas cooler according to claim 1 **characterized in that** in each of the cooling modules (3, 4, 5, 6, 7, 8) at least two mechanical rappers (18) arranged opposite to each other in both the process gas inlet and the process gas outlet area are used to remove the dust particles from the walls inside the process gas ducts (22, 22').

3. Waste gas cooler according to claim 1 or claim 2 **characterized in that** the individual square-shaped ducts (22, 22') are in alternating sequence protruding from the upper flange (21) and are connected to said upper flange (21) by a compensator (25) to allow appropriate guiding of the process gas.

4. Waste gas cooler according to one of the claims 1 to 3 **characterized in that** the individual cooling modules (3, 4, 5, 6, 7, 8) are designed as replaceable structural units each of them having a fitting nose (9) at their lower end that serves to hold them in position when mounted into the receivers (2) provided in the mounting frame (1).

5. Waste gas cooler according to one of the claims 1 to 4 **characterized in that** the square-shaped ducts (22, 22') are aligned in two rows (a, b) arranged one straight after the other, and held in place by a framework (19).

6. Waste gas cooler according to one of the claims 1 to 5 **characterized in that** each individual cooling module (3, 4, 5, 6, 7, 8) has three cooling zones (10a, 10b, 10c) arranged on top of each other, with a cooling air blower (11) assigned to at least one of said cooling zones (10a, 10b, 10c).

7. Waste gas cooler according to one of the claims 1 to 6 **characterized in that** inside the cooling module (3, 4, 5, 6, 7, 8) selected cooling zones (10a,10b,10c) are connected to each other through an air deflection duct.

8. Waste gas cooler according to one of the claims 1 to 7 **characterized in that** the ratio that the front-to-back distance bears to the width of the square-shaped ducts (22, 22') is between 12.5 and 16.666.

9. Waste gas cooler according to one of the claims 1 to 8 **characterized in that** the width of the ducts (22, 22') is between 80mm and 160mm.

10. Waste gas cooler according to one of the claims 1 to 9 **characterized in that** the individual cooling modules (3, 4, 5, 6, 7, 8) are arranged in a pro-defined spacing.

11. Waste gas cooler according to one of the claims 1 to 10 **characterized in that**, within the rappers' (18) sphere of action, reinforcing plates (30) are attached to the outside walls of the outer ducts (22, 22'), have a guide bush (31) to house a striking pin (32).

## Revendications

1. Refroidisseur de gaz résiduels destiné à refroidir des gaz de procédé chargés de poussière, muni de plusieurs conduits d'évacuation formés respectivement par un bloc se composant de plusieurs éléments échangeurs de chaleur écartés les uns des autres, et d'un dispositif collecteur destiné à collecter les particules de poussière et disposé à l'extrémité inférieure du boîtier et ainsi que d'un dispositif de dépoussiérage destiné à enlever les particules adhérent aux éléments échangeurs de chaleur, **caractérisé en ce que** celui-ci se compose d'une construction en acier (1) dans laquelle sont disposés plusieurs conduits d'évacuation formant respectivement un module de refroidissement (3,4,5,6,7,8) et reliés les uns aux autres en vue du guidage du gaz de procédé, les modules de refroidissement (3,4,5,6,7,8) étant reliés sur leur face supérieure au moyen de compensateurs (26) à une hotte d'entrée (12), de renvoi (13) ou d'évacuation (14), et chacun des modules de refroidissement (3,4,5,6,7,8) se compose d'étroits canaux (22,22') de forme rectangulaire dans leur section transversale, qui sont disposés parallèlement les uns par rapport aux autres dans le sens d'écoulement du gaz de procédé, destinés au passage du gaz de procédé et maintenus dans au moins une bride inférieure et supérieure (20,21) en étant écartés les uns des autres latéralement à distance égale afin de former des espaces intermédiaires (23) correspondants en forme de fente destinés au passage de l'air de refroidissement, et des ailettes (24) s'étendant dans le sens d'écoulement de l'air de refroidissement sont disposées sur les faces extérieures entourées par l'air de refroidissement des parois des canaux de forme rectangulaire (22,22').

2. Refroidisseur de gaz résiduels selon la revendication 1, **caractérisé en ce que**, afin d'enlever les particules de poussière adhérent aux parois des canaux (22,22') de guidage du gaz de procédé, deux dispositifs de battage (18) mécaniques opposés l'un à l'autre sont disposés sur chaque module (3,4,5,6,7,8) au moins à chaque fois dans le domaine de l'entrée et de la sortie du gaz de procédé.

3. Refroidisseur de gaz résiduels selon l'une des revendications 1 ou 2, **caractérisé en ce que** tous les canaux de forme rectangulaire (22,22') destinés à guider le gaz de procédé émergent en alternance suivant leur ordre de disposition hors de la bride supérieure (21) et sont reliés à la bride supérieure (21) par l'intermédiaire d'un compensateur (25).

4. Refroidisseur selon l'une des revendications 1 à 3, **caractérisé en ce que** chacun des modules de refroidissement (3,4,5,6,7,8) est réalisé en bloc remplaçable et présente à son extrémité inférieure un épaulement (9) grâce auquel il peut être inséré dans des logements (2) se trouvant sur le bâti (1).

5. Refroidisseur selon l'une des revendications 1 à 4, **caractérisé en ce que** les canaux de forme rectangulaire (22,22') sont disposés en étant alignés sur deux rangées (a,b) directement les uns derrière les autres et sont maintenus dans un cadre (19).

6. Refroidisseur selon l'une des revendications 1 à 5, **caractérisé en ce que** chaque module de refroidissement (3,4,5,6,7,8) présente trois zones de refroidissement (10a,10b,10c) disposées les unes au-dessus des autres et qu'un ventilateur d'air de refroidissement (11) est associé à au moins une zone de refroidissement (10a,10b,10c).

7. Refroidisseur selon l'une des revendications 1 à 6, **caractérisé en ce que** toutes les zones de refroidissement (10a,10b,10c) sont reliées entre elles à l'intérieur d'un module de refroidissement (3,4,5,6,7,8) par un canal de renvoi d'air.

8. Refroidisseur selon l'une des revendications 1 à 7, **caractérisé en ce que** les canaux de forme rectangulaire (22,22') présentent un rapport profondeur/largeur P/l compris entre 12,5 et 16,666.

9. Refroidisseur selon l'une des revendications 1 à 8, **caractérisé en ce que** la largeur l des canaux (22,22') est comprise entre 80 et 160 mm.

10. Refroidisseur selon l'une des revendications 1 à 9, **caractérisé en ce que** chaque module de refroidissement (3,4,5,6,7,8) est disposé avec un écart défini par rapport aux autres.

11. Refroidisseur selon l'une des revendications 1 à 10, **caractérisé en ce que** des plaques de renforcement (30) munies d'un manchon de guidage (31) destiné à loger un percuteur (32) sont maintenues dans le rayon d'action des dispositifs de battage (18) sur les parois extérieures des canaux se trouvant à l'extérieur (22,22').
